(19) 

Europäisches
Patentamt
European
Patent Office
Office européen
des brevets

(11) **EP 4 417 897 A1**

(12) **EUROPEAN PATENT APPLICATION**
published in accordance with Art. 153(4) EPC

(43) Date of publication:
**21.08.2024 Bulletin 2024/34**

(21) Application number: **21960543.3**

(22) Date of filing: **11.10.2021**

(51) International Patent Classification (IPC):
**F25B 1/00** *(2006.01)*

(52) Cooperative Patent Classification (CPC):
**F25B 1/00**

(86) International application number:
**PCT/JP2021/037579**

(87) International publication number:
**WO 2023/062682 (20.04.2023 Gazette 2023/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **HATAKEYAMA Kazunori**
  **Tokyo 100-8310 (JP)**
• **TAKAYAMA Yuji**
  **Tokyo 100-8310 (JP)**

(74) Representative: **Pfenning, Meinig & Partner mbB
Patent- und Rechtsanwälte
Theresienhöhe 11a
80339 München (DE)**

(54) **HEAT PUMP DEVICE**

(57) A heat pump device (100) includes a compressor (1) including a compression system (7) to compress a refrigerant and a motor (8) to drive the compression system (7), an inverter to apply voltage to the motor (8), and an inverter control unit (10) configured to control the inverter, wherein when the compressor (1) needs to be heated, the inverter control unit (10) is configured to control the inverter in a heating operation mode in which high frequency voltage higher than driving frequency voltage, which is voltage of driving frequency of the compression system (7), is applied to the motor (8), and in the heating operation mode, the inverter control unit (10) is configured to control the inverter so that the variation of common-mode voltage induced by switching of the inverter is two thirds or less of bus voltage of the inverter.

FIG. 1

Processed by Luminess, 75001 PARIS (FR)

**Description**

**TECHNICAL FIELD**

The disclosure relates to a heat pump device.

**BACKGROUND ART**

There are techniques to reduce stress caused by switching of switching elements and magnetic noise caused by switching during preheating of a compressor. For example, PTL 1 describes a technique to reduce magnetic noise by randomly changing the zero-vector section of an inverter while heating is performed by causing DC current to flow to the motor of a compressor.

**PRIOR ART REFERENCE**

**PATENT REFERENCE**

Patent Literature 1: Japanese Patent Application No. 2002-277074

**SUMMARY OF THE INVENTION**

**PROBLEM TO BE SOLVED BY THE INVENTION**

However, the conventional technique changes the zero vector randomly, but switching that turns on all switching elements on the upper side of the inverter and zero vector that turns on all switching elements on the lower side of the inverter are both present; thus, the common-mode voltage fluctuates greatly from +1/2 to -1/2 of the input voltage of the inverter.
Therefore, in the conventional technique, especially when high frequency voltage is applied, the common-mode voltage fluctuates quickly, and current leakage from stray capacitance of the compressor increases. For this reason, the conventional technique leads to deterioration of noise and leakage current.
Accordingly, it is an object of one or more aspects of the disclosure to provide a highly efficient refrigerant heating method during standby in order to reduce standby power and also reduce noise and leakage current during refrigerant heating.

**MEANS OF SOLVING THE PROBLEM**

A heat pump device according to a first aspect of the disclosure includes a compressor including a compression system to compress a refrigerant and a motor to drive the compression system; an inverter to apply voltage to the motor; and an inverter control unit configured to control the inverter, wherein the inverter control unit is configured to control the inverter in a heating operation mode when the compressor needs heating, the heating operation mode being a mode in which high frequency voltage higher than driving frequency voltage is applied to the motor, the driving frequency voltage being voltage having a frequency to drive the compression system with, and in the heating operation mode, the inverter control unit is configured to control the inverter so that variation of common-mode voltage induced by switching of the inverter is equal to or less than two thirds of bus voltage of the inverter.
A heat pump device according to a second aspect of the disclosure includes a refrigerant circuit connecting by piping: a compressor including a compression system to compress a refrigerant and a motor to drive the compression system; a first heat exchanger to exchange heat of the refrigerant, an expansion system to expand the refrigerant; and a second heat exchanger to exchange heat of the refrigerant; an inverter to apply voltage to the motor; and an inverter control unit configured to control the inverter, wherein the inverter control unit is configured to control the inverter in a heating operation mode when the compressor needs heating, the heating operation mode being a mode in which high frequency voltage higher than driving frequency voltage is applied to the motor, the driving frequency voltage being voltage having a frequency to drive the compression system with, and in the heating operation mode, the inverter control unit is configured to control the inverter so that variation of common-mode voltage induced by switching of the inverter is equal to or less than two thirds of bus voltage of the inverter.

**EFFECTS OF THE INVENTION**

According to one or more aspects of the disclosure, a highly efficient refrigerant heating method is provided during standby in order to reduce standby power and also reduce noise and leakage current during refrigerant heating.

**BRIEF DESCRIPTION OF THE DRAWINGS**

FIG. 1 is a block diagram schematically illustrating a configuration of a heat pump device according to a first embodiment.

FIG. 2 is a circuit diagram illustrating a configuration of an inverter device according to the first embodiment.

FIG. 3 is a block diagram schematically illustrating a configuration of an inverter control unit as a comparative example.

FIG. 4 is a schematic diagram illustrating input and output waveforms of a PWM-signal generating unit.

FIG. 5 is a table of eight different switching patterns.

FIG. 6 is a block diagram schematically illustrating a configuration of an inverter control unit according to the first embodiment.

FIG. 7 is a timing chart illustrating a case where a selecting unit alternately switches between a phase θp and a phase θn at timings of the tops and bottoms of a carrier signal.

FIGS. 8A to 8D are schematic diagrams for explaining variation in voltage vectors.

FIG. 9 is a diagram illustrating a rotor position of an IPM motor.

FIG. 10 is a graph illustrating current variation depending on rotor position.

FIGS. 11A to 11D are schematic diagrams for explaining applied voltage when a reference phase is varied over time.

FIG. 12 is a schematic diagram illustrating current flowing in UVW phases of a motor when the reference phase is 0, 30, and 60 degrees.

FIG. 13 is a block diagram schematically illustrating a configuration of a heating judgement unit.

FIG. 14 is a table representing variation in common-mode voltage.

FIG. 15 is a schematic diagram illustrating voltage when high frequency voltage is applied.

FIG. 16 is a schematic diagram illustrating an example of a vector pattern employed in the first embodiment.

FIG. 17 is a flowchart illustrating the operation of the inverter control unit according to the first embodiment.

FIG. 18 is a block diagram schematically illustrating a configuration of a heat pump device according to a second embodiment.

FIG. 19 is a Mollier diagram illustrating the state of a refrigerant of a heat pump device according to the second embodiment.

**MODE FOR CARRYING OUT THE INVENTION**

**FIRST EMBODIMENT**

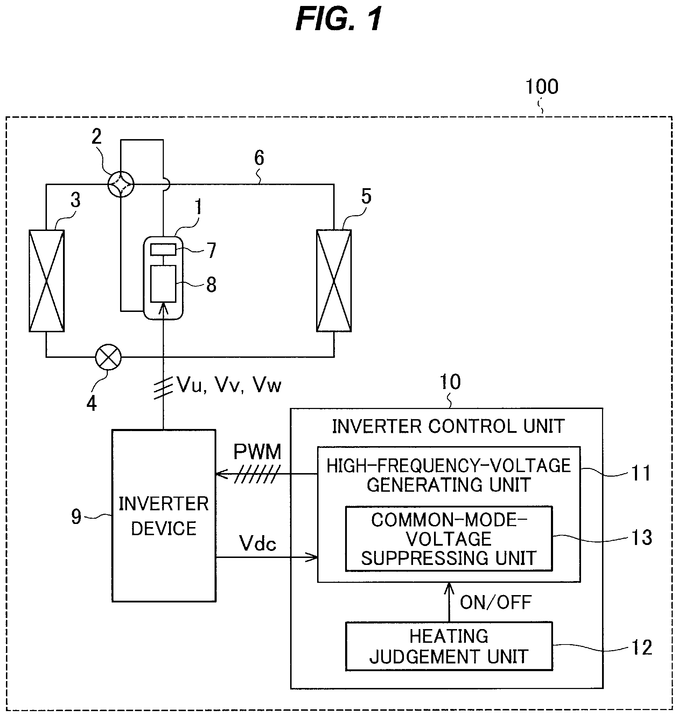

FIG. 1 is a block diagram schematically illustrating a configuration of a heat pump device 100 according to the first embodiment.

The heat pump device 100 includes a compressor 1, a four-way valve 2, a heat exchanger 3, an expansion system 4, a heat exchanger 5, and a refrigerant piping 6. The compressor 1, the four-way valve 2, the heat exchanger 3, the expansion system 4, and the heat exchanger 5 are sequentially connected through the refrigerant piping 6 to form a refrigeration cycle. The heat exchanger 3 is also referred to as a first heat exchanger, and the heat exchanger 5 is also referred to as a second heat exchanger.

A compression system 7 to compress a refrigerant and a motor 8 to drive the compression system 7 are provided inside the compressor 1. The motor 8 is a three-phase motor with three-phase windings of U-phase, V-phase, and W-phase.

The heat pump device 100 further includes an inverter device 9 and an inverter control unit 10 to control the inverter device 9.

The inverter device 9 is electrically connected to the motor 8 and applies voltage to the motor 8 to drive it. The inverter device 9 applies voltage Vu, Vv, and Vw to the windings of the U, V, and W phases of the motor 8, respectively.

The inverter control unit 10 is electrically connected to the inverter device 9. The inverter control unit 10 includes a high-frequency-voltage inducing unit 11 and a heating judgement unit 12.

When the compressor 1 needs heating, the inverter control unit 10 controls an inverter (described later) included in the inverter device 9 in a heating operation mode in which high frequency voltage higher than driving frequency voltage, which is the voltage of the driving frequency of the compression system 7, is applied to the motor 8. In the heating operation mode, the inverter control unit 10 controls the inverter so that variation of common-mode voltage induced by switching of the inverter is equal to or less than two thirds of a bus voltage of the inverter.

For example, on the basis of the value of bus voltage Vdc, which is the power supply voltage of the inverter device 9, and judgment by the heating judgement unit 12 that the compressor 1 needs heating, the high-frequency-voltage inducing unit 11 of the inverter control unit 10 uses a common-mode-voltage suppressing unit 13 to generate pulse width modulation (PWM) signals (drive signal) that apply high frequency voltage with suppressed common-mode voltage and outputs the generated PWM signals to the inverter device 9.

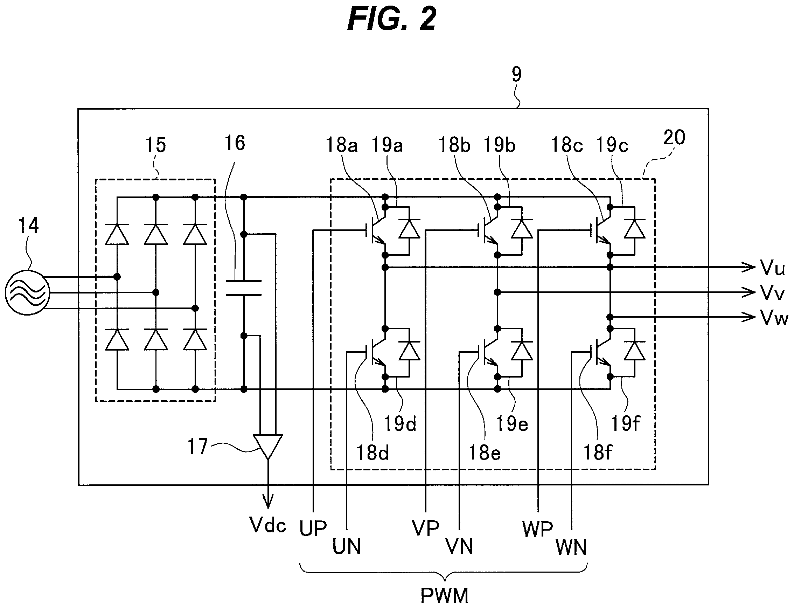

FIG. 2 is a circuit diagram illustrating a configuration of the inverter device 9 according to the first embodiment.

The inverter device 9 includes a rectifier 15, a smoothing capacitor 16, and a bus-voltage detecting unit 17.

The rectifier 15 rectifies the voltage supplied from an AC power source 14.

The smoothing capacitor 16 induces DC voltage by smoothing the voltage rectified by the rectifier 15. The DC voltage induced here becomes the bus voltage Vdc.

The bus-voltage detecting unit 17 detects the DC voltage induced by the smoothing capacitor 16 as the bus voltage Vdc and outputs it to the inverter control unit 10.

The inverter device 9 further includes an inverter 20 powered by the bus voltage Vdc. The inverter 20 applies voltage to the motor 8. The inverter 20 is controlled by the inverter control unit 10.

In the inverter 20, two switching elements 18a and 18d connected in series, two switching elements 18b and 18e connected in series, and two switching elements 18c and 18f connected in series are connected in parallel. The switching elements 18a to 18f are respectively provided in parallel with ring-flow diodes 19a to 19f.

In the following description, when there is no need to distinguish between the switching elements 18a to 18f, any one of the switching elements 18a to 18f is referred to as a switching element 18.

When there is no need to distinguish between the ring-flow diodes 19a to 19f, any one of the ring-flow diodes 19a to 19f is referred to as a ring-flow diode 19.

In the inverter 20, PWM signals UP, VP, WP, UN, VN, and WN sent from the inverter control unit 10 each drives a corresponding switching element 18. The inverter 20 then applies voltage Vu, Vv, and Vw corresponding to the driven switching elements 18 to the U, V, and W phase windings of the motor 8, respectively. As a result, three-phase AC voltage is applied to the motor 8.

Here, when the compressor 1 needs heating, the inverter control unit 10 causes the inverter 20 to switch between a first voltage phase and a second voltage phase shifted 180 degrees from the first voltage phase in a switching cycle of the inverter 20.

In the heating operation mode, the width between positive peaks of the common-mode voltage and negative peaks of the common-mode voltage is less than that of the bus voltage of the inverter 20.

For example, as described later, the inverter control unit 10 does not execute control to turn on all three-phase upper switching elements 18a, 18b, and 18c or control to turn on all three-phase lower switching elements 18d, 18e, and 18f during the switching cycle of the inverter 20, so that variation in the common-mode voltage induced by the switching of the inverter 20 is equal to or less than two thirds of the bus voltage of the inverter 20.

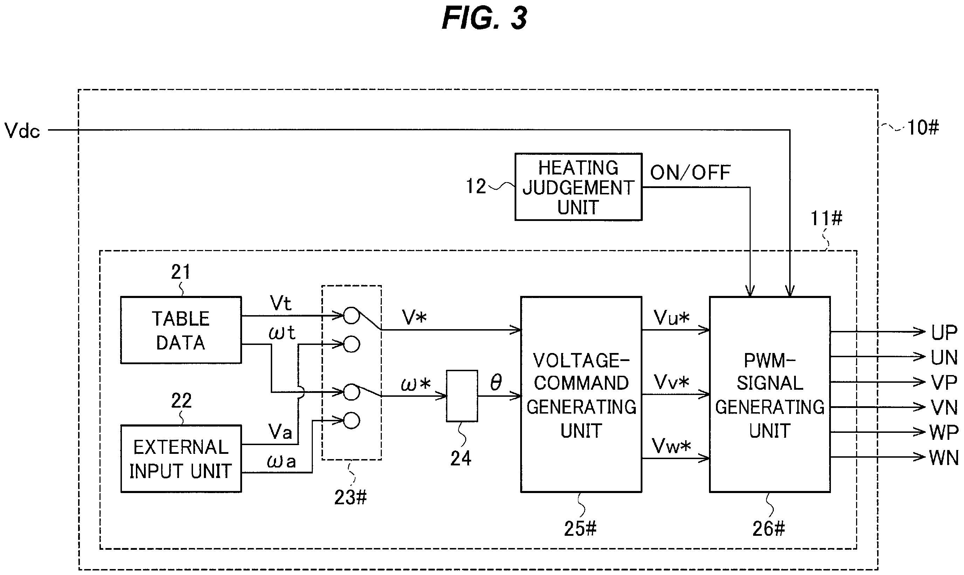

FIG. 3 is a block diagram schematically illustrating a configuration of a regular inverter control unit 10# as a comparative example.

The inverter control unit 10# includes a high-frequency-voltage inducing unit 11# and a heating judgement unit 12. The heating judgement unit 12 is described later because it is the same as the heating judgement unit 12 of the inverter control unit 10 according to the first embodiment. Here, the high-frequency-voltage inducing unit 11# will be described.

The high-frequency-voltage inducing unit 11# includes table data 21, an external input unit 22, a selecting unit 23#, an integrator 24, a voltage-command generating unit 25#, and a PWM-signal generating unit 26#.

The table data 21 and the external input unit 22 of the inverter control unit 10# are the same as the corresponding components of the inverter control unit 10 according to the first embodiment.

The selecting unit 23# selects, as a voltage command value V*, one of a voltage command value Vt recorded in the table data 21 and a voltage command value Va inputted from the external input unit 22. The selecting unit 23# then gives the voltage command value V* to the voltage-command generating unit 25#.

Moreover, the selecting unit 23# selects, as a rotation-speed command value ω*, one of a rotation-speed command value ωt recorded in the table data 21 and a rotation-speed command value ωa inputted from the external input unit 22. The selecting unit 23# then gives the rotation-speed command value ω* to the integrator 24.

The integrator 24 obtains a voltage-command-value phase θ from the rotation-speed command value ω* outputted by the selecting unit 23.

The voltage-command generating unit 25# uses, as input, the voltage command value V* and the voltage-command-value phase θ obtained by the integrator 24, and generates voltage command values Vu*, Vv*, and Vw*. The voltage-command generating unit 25# then gives the voltage command values Vu*, Vv*, and Vw* to the PWM-signal generating unit 26#.

The PWM-signal generating unit 26# generates PWM signals UP, VP, WP, UN, VN, and WN on the basis of the voltage command values Vu*, Vv*, and Vw* from the voltage-command generating unit 25 and the bus voltage Vdc. The PWM-signal generating unit 26# then gives the PWM signals UP, VP, WP, UN, VN, and WN to the inverter device 9.

Here, it is explained the method of generating the voltage command values Vu*, Vv*, and Vw* by the voltage-command generating unit 25# and the method of generating the PWM signals UP, VP, WP, UN, VN, and WN by the PWM-signal generating unit 26#.

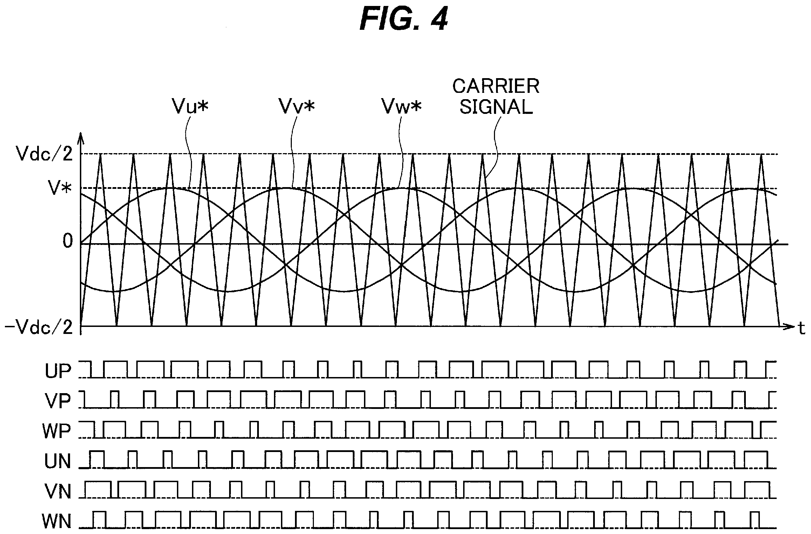

FIG. 4 is a schematic diagram illustrating input and output waveforms to and from the PWM-signal generating unit 26#.

For example, when the common-mode voltage suppression described later is not performed, the voltage command values Vu*, Vv*, and Vw* are defined as cosine waves or sine waves having phases different by $2\pi/3$ as in equations (1) to (3). Here, V* is the amplitude of a voltage command value and $\theta$ is the voltage-command-value phase.

$$Vu* = V*cos\theta \qquad (1)$$

$$Vv* = V*cos(\theta-(2/3)\pi) \qquad (2)$$

$$Vw* = V*cos(\theta+(2/3)\pi) \qquad (3)$$

The voltage-command generating unit 25# calculates the voltage command values Vu*, Vv*, and Vw* by equations (1) to (3) on the basis of the voltage command value V* and the voltage-command-value phase $\theta$ obtained by the integrator 24, and outputs the calculated voltage command values Vu*, Vv*, and Vw* to the PWM-signal generating unit 26#.

The PWM-signal generating unit 26# compares the voltage command values Vu*, Vv*, and Vw* with a carrier signal of an amplitude Vdc/2 at a predetermined frequency, and generates PWM signals UP, VP, WP, UN, VN, and WN on the basis of the mutual magnitude relationship. Here, the carrier signal is used as a reference signal.

For example, when the voltage command value Vu* is larger than the carrier signal, the PWM-signal generating unit 26# sets the corresponding voltage as the PWM signal UP to turn on the switching element 18a and sets the corresponding voltage as the PWM signal UN to turn off the switching element 18d. In contrast, when the voltage command value Vu* is smaller than the carrier signal, the PWM-signal generating unit 26# sets the corresponding voltage as the PWM signal UP to turn off the switching element 18a and sets the corresponding voltage as the PWM signal UN to turn on the switching element 18d. The same applies to the other signals, and the PWM-signal generating unit 26# determines the PWM signals VP and VN by comparing the voltage command value Vv* with the carrier signal, and determines the PWM signals WP and WN by comparing the voltage command value Vw* with the carrier signal.

In the case of the regular inverter, which adopts the complementary PWM method, the PWM signals UP and UN, the PWM signals VP and VN, and the PWM signals WP and WN are each set of signals inversely related to each other. Therefore, there are a total of eight switching patterns.

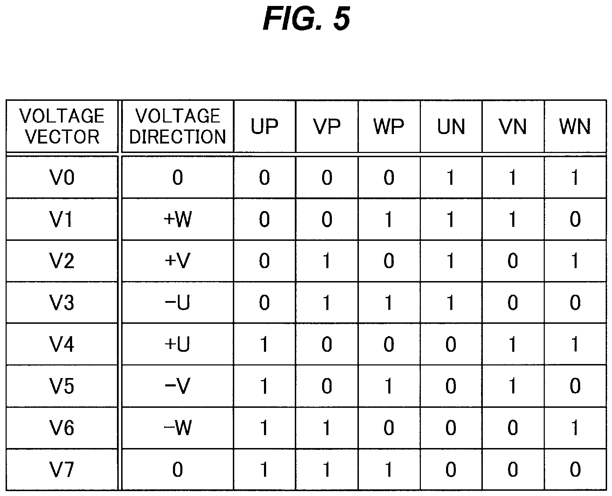

FIG. 5 is a table of the eight different switching patterns.

In FIG. 5, the voltage vectors induced in the respective switching patterns are denoted by reference signs V0 to V7.

The voltage directions of the voltage vectors are expressed by $\pm$U, $\pm$V, and $\pm$W. When no voltage is induced, the voltage direction is zero.

Here, +U is voltage that generates a U-phase direction current flowing into the motor 8 through the U phase and flowing out of the motor 8 through the V and W phases.

Meanwhile, -U is voltage that generates a -U-phase direction current flowing into the motor 8 through the V and W phases and flowing out of the motor 8 through the U phase. The same applies to $\pm$V and $\pm$W.

The PWM-signal generating unit 26# combines the switching patterns in FIG. 5 and outputs voltage vectors to output desired voltage to the inverter device 9.

When a refrigerant of a typical compressor 1 is compressed with the motor 8 in a regular operation mode, the motor usually operates at 1 kHz or less.

In contrast, the PWM-signal generating unit 26# outputs high frequency voltage exceeding 1 kHz by varying the phase at high speed and energizes the compressor 1, to enter a heating operation mode.

In addition to equations (1) to (3), the voltage-command generating unit 25# may obtain the voltage command values Vu*, Vv*, and Vw* through two-phase modulation, third harmonic superposition modulation, spatial vector modulation, or the like.

However, in the case of a typical inverter, the upper limit of the carrier frequency, which is the frequency of the carrier signal, is determined by the switching speed of the switching elements of the inverter. Therefore, it is difficult to output high frequency voltage equal to or higher than the carrier frequency, which is the frequency of the carrier signal, or carrier wave. The maximum switching speed for a typical insulated gate bipolar transistor (IGBT) is approximately 20kHz.

When the frequency of the high frequency voltage becomes approximately 1/10 of the carrier frequency, the waveform output accuracy of the high frequency voltage deteriorates, and there is a risk of adverse effects such as superposition of DC components. With this in consideration, when the carrier frequency is set to 20 kHz, and the frequency of the high frequency voltage is set to 1/10 of the carrier frequency, or 2 kHz or less, the frequency of the high frequency voltage enters an audible frequency range, and there is concern of noise deterioration.

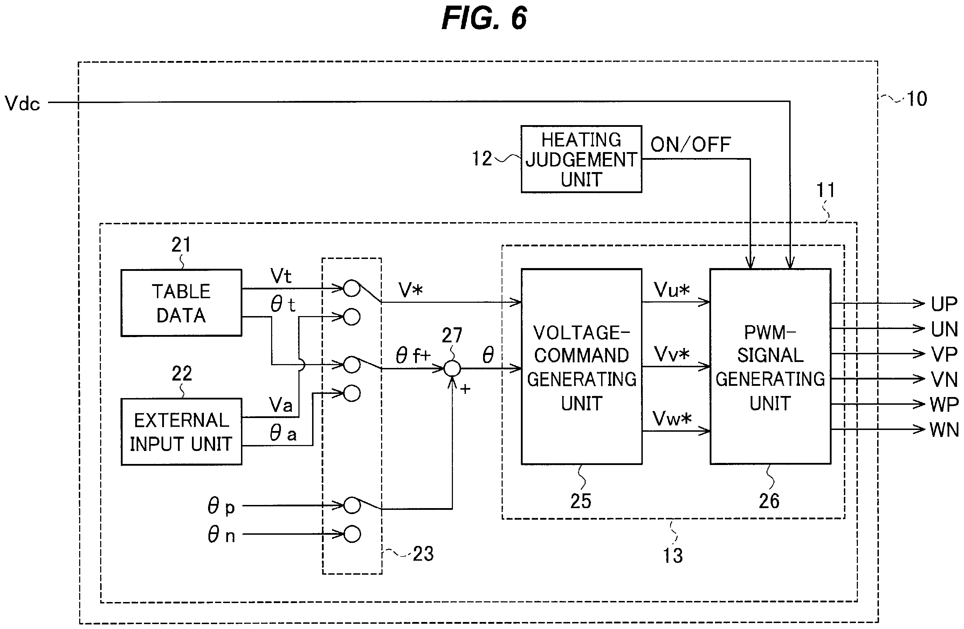

As illustrated in FIG. 6, the inverter control unit 10 according to the first embodiment includes, in place of the integrator 24 illustrated in FIG. 3, an adding unit 27 to generate a voltage-command-value phase $\theta$ by adding a phase $\theta$p or a phase $\theta$n selected by the selecting unit 23 to a reference phase $\theta$f.

FIG. 6 is a block diagram schematically illustrating a configuration of the inverter control unit 10 according to the first embodiment.

Here, the regular inverter control unit 10# illustrated in FIG. 3 obtains the voltage-command-value phase $\theta$ by integrating the rotation-speed command value $\omega$* with the integrator 24. In contrast, in the inverter control unit 10 illustrated in FIG. 6, the selecting unit 23, which functions as a phase switching unit, alternately switches between two types of voltage-command-value phases: the phase $\theta$p and the phase $\theta$n, which is approximately 180 degrees different from the phase $\theta$p.

The selecting unit 23 selects one of a phase $\theta$t recorded in the table data 21 and a phase $\theta$a inputted from the external input unit 22 as a reference phase $\theta$f. The selecting unit 23 then gives the reference phase $\theta$f to the adding unit 27.

For example, the selecting unit 23 alternately switches between the phases $\theta$p and $\theta$n at timings of the tops or bottoms of the carrier signal, or at timings of the tops and bottoms. Here, the tops of the carrier signal are also referred to as high points, and the bottoms of the carrier signal are also referred to as lower points.

The adding unit 27 adds the phase $\theta$p or $\theta$n selected by the selecting unit 23 to the reference phase $\theta$f to generate the voltage-command-value phase $\theta$. The adding unit 27 then gives the voltage-command-value phase $\theta$ to the voltage-command generating unit 25. In the following explanation, $\theta$p=0 [degrees] and $\theta$n=180 [degrees].

The voltage-command generating unit 25 uses the voltage-command-value phase $\theta$ and the voltage command value V* to generate the voltage command values Vu*, Vv*, and Vw* from the above equations (1) to (3). The voltage-command generating unit 25 then gives the voltage command values Vu*, Vv*, and Vw* to the PWM-signal generating unit 26.

The selecting unit 23 can output a PWM signal synchronized with the carrier signal by switching between the phases $\theta$p and $\theta$n at the tops or bottoms of the carrier signal or at the tops and bottoms of the carrier signal.

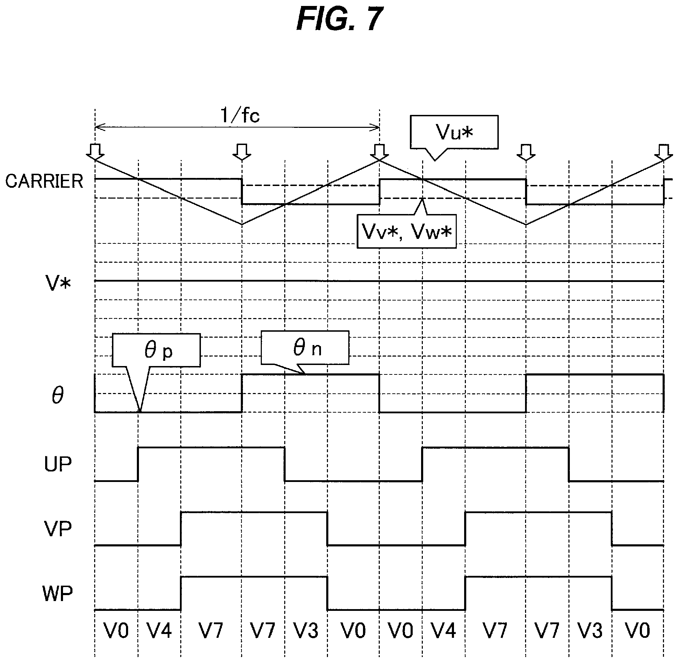

FIG. 7 is a timing chart illustrating a case where the selecting unit 23 alternately switches between the phases $\theta$p and $\theta$n at timings of the tops and bottoms of the carrier signal.

The PWM signals UP and UN, the PWM signals VP and VN, and the PWM signals WP and WN are each set of signals in opposite on and off states, and since if the on or off state of one in the set is determined the other one in the set can be determined; thus, only the PWM signals UP, VP, and WP are illustrated.

Here, the reference phase $\theta$f=0 [degrees]. In this case, the PWM signal varies as illustrated in FIG. 7. The voltage vectors vary in the following order: V0 (UP=VP=WP=0), V4 (UP=1, VP=WP=0), V7 (UP=VP=WP=1), V3 (UP=0, VP=WP=1), V0 (UP=VP=WP=0), ...

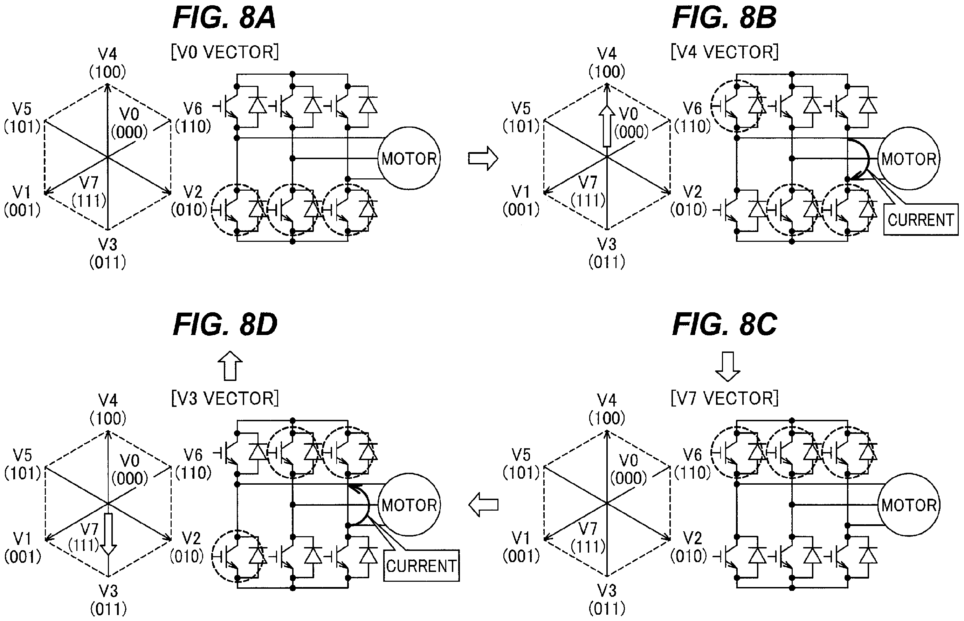

FIGS. 8A to 8D are schematic diagrams for explaining variation of the voltage vectors illustrated in FIG. 7.

In FIGS. 8A to 8D, the switching elements 18 surrounded by the dashed lines are in an on state and the switching elements 18 not surrounded by the dashed lines are in an off state.

As illustrated in FIG. 8A to 8C, when the voltage vector V0 or V7 is applied, the lines to the motor 8 becomes short-circuited and voltage is not output. In this case, the energy accumulated in the inductance of the motor 8 flows through the short circuit as current.

As illustrated in FIG. 8B, when the voltage vector V4 is applied, the U-phase direction current +Iu flowing into the motor 8 through the U phase and flowing out of the motor 8 through the V and W phases flows through the windings of the motor 8.

As illustrated in FIG. 8D, when the voltage vector V3 is applied, the -U-phase direction current -Iu flowing into the motor 8 through the V and W phases and flowing out of the motor 8 through the U phase flows through the windings of the motor 8.

In other words, upon the application of the voltage vector V4 and the voltage vector V3, the current in the windings of the motor 8 flows in reverse directions.

As explained with reference to FIG. 7, since the voltage vectors vary in the order of the voltage vector V0, the voltage vector V4, the voltage vector V7, the voltage vector V3, the voltage vector V0, ..., the current +Iu and the current -Iu alternately flow to the windings of the motor 8.

In particular, as illustrated in FIG. 5, since the voltage vectors V4 and V3 appear within one carrier cycle (1/fc), AC voltage synchronized with the carrier frequency fc can be applied to the windings of the motor 8.

Since the voltage vectors V4 and V3 are output alternately, the forward torque and the reverse torque are switched instantaneously. Accordingly, the two pieces of torque are offset so that it is possible to apply voltage that suppresses the vibration of the rotor of the motor 8.

When the selecting unit 23 alternately switches between the phases θp and θn at timings of the bottoms of the carrier signal, the voltage vectors vary in the following order: the voltage vector V0, the voltage vector V4, the voltage vector V7, the voltage vector V7, the voltage vector V3, the voltage vector V0, the voltage vector V0, the voltage vector V3, the voltage vector V7, the voltage vector V7, the voltage vector V4, the voltage vector V0, ... Since the voltage vectors V4 and V3 appear in two carrier cycles, it is possible to apply AC voltage of 1/2 carrier frequency to the windings of the motor 8.

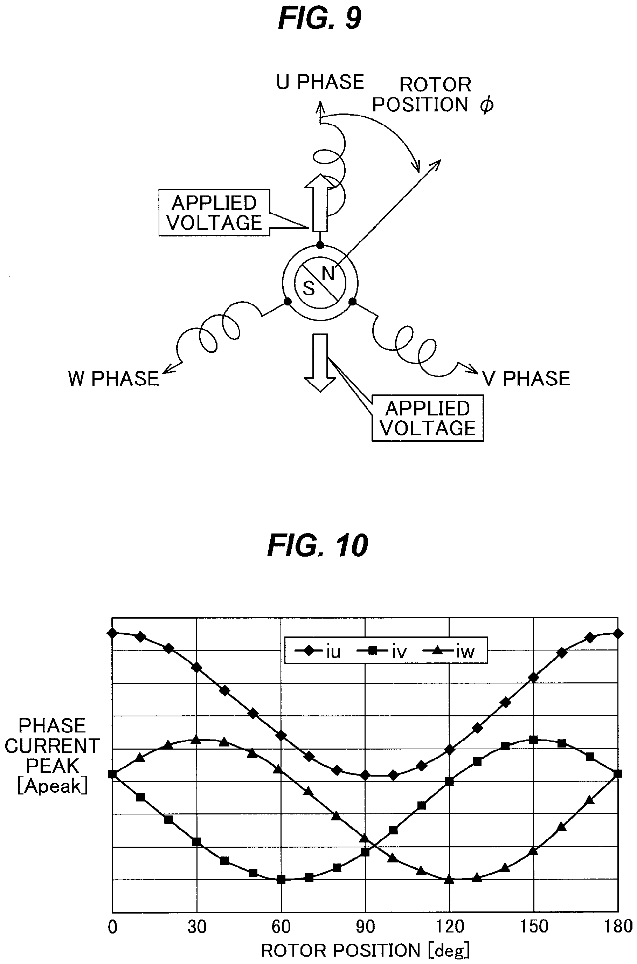

FIG. 9 is a diagram illustrating the rotor position of an interior permanent magnet (IPM) motor.

Here, the rotor position φ of the IPM motor is the stop position of the rotor. As illustrated in FIG. 9, the rotor position φ is represented by the angle of the N pole of the rotor from the U phase direction.

FIG. 10 is a graph illustrating the current variation by rotor position.

In the case of an IPM motor, the winding inductance depends on the rotor position. Therefore, the winding impedance expressed as the product of the electrical angular frequency ω and the inductance value fluctuates in accordance with the rotor position. As a result, even when the same voltage is applied, the current flowing through the windings of the motor 8 fluctuates depending on the rotor position, and the heating amount varies. Consequently, depending on the rotor position, there may be a risk of high-power consumption in order to achieve the required heating amount.

Accordingly, the selecting unit 23 ensures that voltage is applied evenly to the rotor by varying the reference phase θf over time.

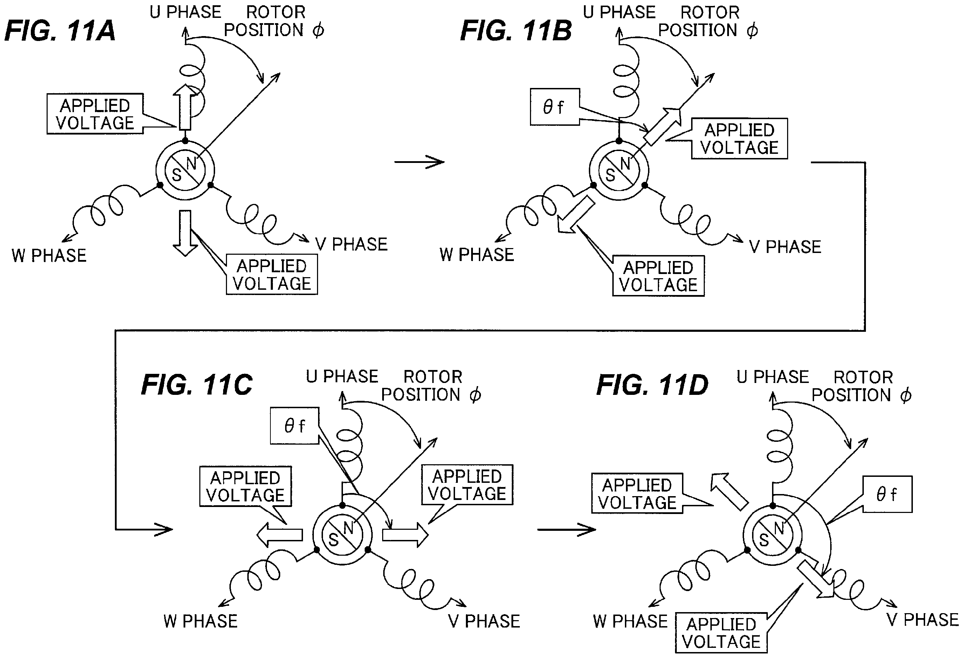

FIGS. 11A to 11D are schematic diagrams for explaining the voltage applied when the reference phase θf is varied over time.

Here, an example is illustrated in which the reference phase θf is varied over time in 45-degree increments, i.e., 0 degrees, 45 degrees, 90 degrees, 135 degrees, ...

As illustrated in FIG. 11A, when the reference phase θf is 0 degrees, the voltage-command-value phase θ is 0 degrees and 180 degrees.

As illustrated in FIG. 11B, when the reference phase θf is 45 degrees, the voltage-command-value phase θ is 45 degrees and 225 degrees.

As illustrated in FIG. 11C, when the reference phase θf is 90 degrees, the voltage-command-value phase θ is 90 degrees and 270 degrees.

As illustrated in FIG. 11D, when the reference phase θf is 135 degrees, the voltage-command-value phase θ is 135 degrees and 315 degrees.

In other words, at the beginning, as illustrated in FIG. 11A, the reference phase θf is set to 0 degrees, and the voltage-command-value phase θ is switched between 0 and 180 degrees in synchronization with the carrier signal for a predetermined time.

Subsequently, as illustrated in FIG. 11B, the reference phase θf is switched to 45 degrees, and the voltage-command-value phase θ is switched between 45 degrees and 225 degrees in synchronization with the carrier signal for a predetermined time.

Subsequently, as illustrated in FIG. 11C, the reference phase θf is switched to 90 degrees, and in a similar manner, the voltage-command-value phase θ is switched between 0 degrees and 180 degrees, 45 degrees and 225 degrees, 90 degrees and 270 degrees, 135 degrees and 315 degrees, ... at predetermined time intervals. This causes the energizing phase of the high frequency AC voltage to vary over time, and the influence of the inductance characteristic depending on the rotor stop position can be eliminated, which enables uniform heating of the compressor 1 independent of the rotor position.

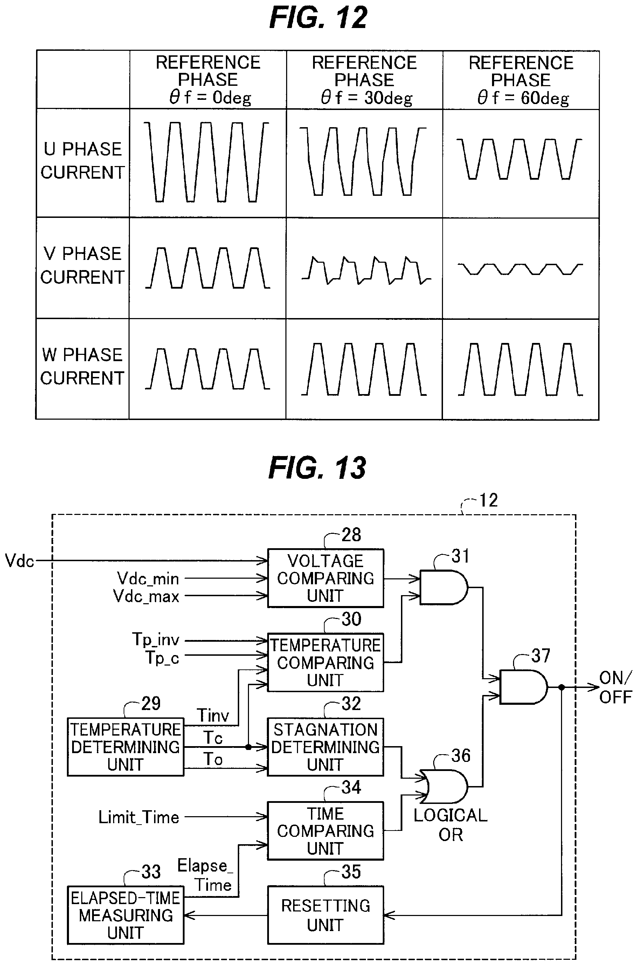

FIG. 12 is a schematic diagram illustrating the current flowing in each of the UVW phases of the motor 8 when the reference phase θf is 0, 30, and 60 degrees.

For the reference phase θf, here, the U phase direction of the voltage vector V4 is set to 0 degrees.

When the reference phase θf is 0 degrees, only one other voltage vector is generated between the voltage vector V0 and the voltage vector V7, as illustrated in FIG. 7. The other voltage vector here is a voltage vector that turns on one of the switching elements 18a to 18f on the positive voltage side and two on the negative voltage side, or that turns on two of the switching elements 18a to 18f on the positive voltage side and one on the negative voltage side. In this case, the current waveform is trapezoidal, which results in a current with few harmonic components.

However, when the reference phase θf is 30 degrees, two other voltage vectors are generated between the voltage vectors V0 and V7. In this case, the current waveform is distorted, which results in a current with many harmonic components. This distortion of the current waveform may adversely affect the motor noise or motor shaft vibration.

Similar to when the reference phase θf is 0 degrees, when the reference phase θf is 60 degrees, only one other voltage vector is generated between the voltage vectors V0 and V7. In this case, the current waveform is trapezoidal, which results in a current with few harmonic components.

In this way, when the reference phase $\theta f$ is an n-multiple of 60 degrees (where n is an integer equal to or greater than zero), the voltage-command-value phase $\theta$ is a multiple of 60 degrees, and only one other voltage vector is generated between the voltage vectors V0 and V7.

Meanwhile, when the reference phase $\theta f$ is other than an n-multiple of 60 degrees, the voltage-command-value phase $\theta$ is not a multiple of 60 degrees, and two other voltage vectors are generated between the voltage vectors V0 and V7. If two other voltage vectors are generated between the voltage vectors V0 and V7, the current waveform is distorted; and this results in a current having many harmonic components, which may adversely affect the motor noise or motor shaft vibration.

Therefore, in the selecting unit 23, it is desirable to vary the reference phase $\theta f$ by increments of 60 degrees, such as 0 degrees, 60 degrees, ...

FIG. 13 is a block diagram schematically illustrating a configuration of the heating judgement unit 12.

The heating judgement unit 12 controls the on and off states, or operating states, of the high-frequency-voltage inducing unit 11 on the basis of the bus voltage Vdc detected by the bus-voltage detecting unit 17 of the inverter device 9.

The heating judgement unit 12 includes a voltage comparing unit 28, a temperature detecting unit 29, a temperature comparing unit 30, a first logical-AND calculating unit 31, a stagnation determining unit 32, an elapsed-time measuring unit 33, a time comparing unit 34, a resetting unit 35, a logical-OR calculating unit 36, and a second logical-AND calculating unit 37.

The voltage comparing unit 28 determines that it is a normal state when the bus voltage Vdc detected by the bus-voltage detecting unit 17 satisfies Vdc_min<Vdc<Vdc_max, and otherwise determines that it is an abnormal state. The voltage comparing unit 28 then outputs "1" in a normal state and "0" in an abnormal state.

Here, Vdc_max is the upper limit of the bus voltage, and Vdc_min is the lower limit of the bus voltage. In the case of an excessive bus voltage of Vdc_max or more, or an insufficient bus voltage of Vdc_min or less, the voltage comparing unit 28 determines that it is an abnormal state and operates to stop heating.

The temperature detecting unit 29 detects the inverter temperature Tinv of the inverter 20, the temperature Tc of the compressor 1, and the outside air temperature To.

The temperature comparing unit 30 compares the protection temperature Tp_inv of the inverter 20 with the inverter temperature Tinv. Moreover, the temperature comparing unit 30 compares the protection temperature Tp_c of the compressor 1 with the compressor temperature Tc. Here, the protection temperature Tp_inv of the inverter 20 and the protection temperature Tp_c of the compressor 1 are assumed to be set in advance.

The temperature comparing unit 30 determines that when Tp_inv>Tinv and Tp_c>Tc, it is a normal state, and otherwise, an abnormal state. The temperature comparing unit 30 then outputs "1" in a normal state and "0" in an abnormal state.

Here, when Tp_inv<Tinv, the inverter temperature Tinv is high, and when Tp_c<Tc, the winding temperature of the motor 8 in the compressor 1 is high, which may lead to insulation failure or the like. Therefore, the temperature comparing unit 30 determines that heating is unnecessary and operates to stop the heating. Here, it is necessary to set Tp_c in consideration of the fact that the compressor 1 has heat capacity larger than that of the windings of the motor 8, and the temperature rising speed is slower than that of the windings.

The first logical-AND calculating unit 31 outputs a logical AND between an output value of the voltage comparing unit 28 and an output value of the temperature comparing unit 30. When any one of the output values of the voltage comparing unit 28 and the temperature comparing unit 30 is "0" indicating an abnormal state, the first logical-AND calculating unit 31 outputs "0" to operate to stop the heating.

Although the method of stopping the heating by using the bus voltage Vdc, the inverter temperature Tinv, and the temperature Tc of the compressor 1 has been explained herein, all of these temperatures need not be used. A configuration may be provided to stop heating by using parameters other than those described above.

The stagnation determining unit 32 determines whether or not the liquid refrigerant in the compressor 1 is in a state of stagnation on the basis of the temperature Tc of the compressor 1 and the outside air temperature To detected by the temperature detecting unit 29. In a state of refrigerant stagnation, a liquid refrigerant is retained within the compressor 1.

The compressor 1 has the largest heat capacity in the refrigeration cycle, and the temperature Tc of the compressor 1 rises later than the outside air temperature To. Therefore, the temperature Tc of the compressor 1 is the lowest. Since the refrigerant is retained in a portion of the refrigeration cycle where the temperature is lowest, and accumulates as a liquid refrigerant, the refrigerant accumulates in the compressor 1 when the temperature rises.

Therefore, the stagnation determining unit 32 determines that the refrigerant is stagnated in the compressor 1 when To>Tc, and that the refrigerant is not stagnated in the compressor 1 when To<Tc. Consequently, the stagnation determining unit 32 outputs "1" to start heating when To>Tc, and outputs "0" to stop heating when To<Tc.

The stagnation determining unit 32 may start the heating when the outside air temperature To or the temperature Tc of the compressor 1 is in an upward trend. As a result, when the detection of the outside air temperature To or the temperature Tc of the compressor 1 is difficult, the stagnation determining unit 32 can be controlled using the other one of the temperatures, which can achieve reliable control.

Here, if both the temperature Tc of the compressor 1 and the outside air temperature To become undetectable, heating of the compressor 1 may become impossible. Thus, the elapsed-time measuring unit 33 measures Elapse_Time, which is the time during which the compressor 1 is not heated. The time comparing unit 34 compares Elapse_Time with Limit_Time, which is a predetermined time limit. The time comparing unit 34 then outputs "1" to start heating the compressor 1 when Elapse_Time exceeds Limit_Time.

Since the temperature rises in the morning through noon while the sun rises, and the temperature drops from sunset through night, the daily temperature change is repeated approximately every 12 hours. Thus, for example, Limit_Time should be set to approximately 12 hours.

The resetting unit 35 instructs the elapsed-time measuring unit 33 to reset Elapse_Time to zero when the compressor 1 has been heated.

The logical-OR calculating unit 36 outputs a logical OR of the output value of the stagnation determining unit 32 and the output value of the time comparing unit 34. When either one of the output values of the stagnation determining unit 32 and the time comparing unit 34 is set to "1," which represents the start of heating, the logical-OR calculating unit 36 outputs "1" to start heating the compressor 1.

The second logical-AND calculating unit 37 outputs a logical AND of the output value of the first logical-AND calculating unit 31 and the output value of the logical-OR calculating unit 36 as the output value of the heating judgement unit 12. When the output value of the second logical-AND calculating unit 37 is "1," the high-frequency-voltage inducing unit 11 is operated to heat the compressor 1. Meanwhile, when the output value is "0," the high-frequency-voltage inducing unit 11 is not operated, the compressor 1 is not heated or the operation of the high-frequency-voltage inducing unit 11 is stopped, and the heating of the compressor 1 is stopped.

Since the second logical-AND calculating unit 37, which outputs a logical AND is provided, heating can be stopped when the first logical-AND calculating unit 31 is outputting a signal 0 indicating the stop of heating of the compressor 1, even when the logical-OR calculating unit 36 is outputting a signal 1 indicating the start of heating. In this way, power consumption in standby can be minimized while reliability is ensured.

Since the stagnation determining unit 32 can detect the extent to which the liquid refrigerant has been retained in the compressor 1 on the basis of the temperature Tc of the compressor 1 and the outside air temperature To, the heat quantity or electrical power necessary to discharge the refrigerant to the outside of the compressor 1 can be calculated in accordance with the detected amount of the liquid refrigerant, and the high-frequency-voltage inducing unit 11 can be operated so as to perform the minimum necessary heating. In this way, reducing power consumption is capable to reduce the impact of global warming.

The method of suppressing the common-mode voltage by the common-mode-voltage suppressing unit 13 will now be explained.

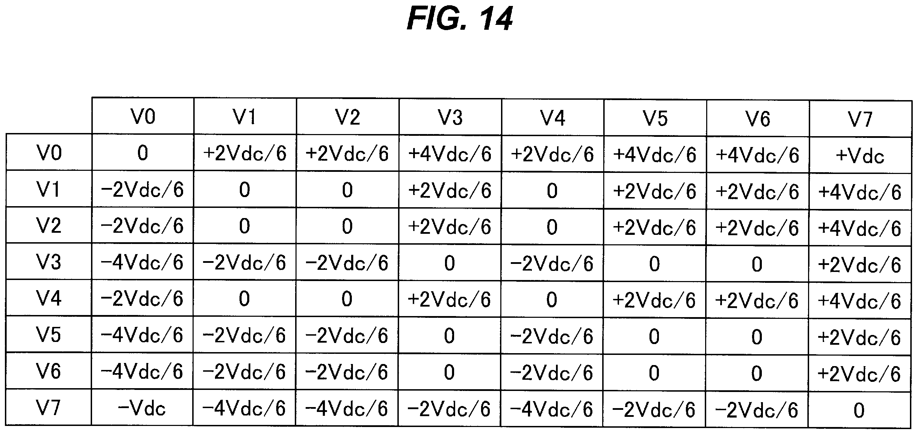

FIG. 14 is a table showing the variation of the common-mode voltage in the case of transition from one voltage vector to another.

When such a common-mode voltage is induced in the motor 8, noise or leakage current such as noise terminal voltage increases through stray capacitance present in the compressor 1 and other components constituting the refrigeration cycle.

Especially with regard to stray capacitance, since impedance decreases at higher frequency voltages, the effect is greater when the common-mode voltage rises steeply. Therefore, it is desirable to avoid transition of switching states in which the amount of time variation (dV/dt) in the common-mode voltage is high. The first embodiment avoids transition of switching states with fluctuation of $\pm 4 Vdc/6$, which is the maximum absolute value of the time variation of the common-mode voltage.

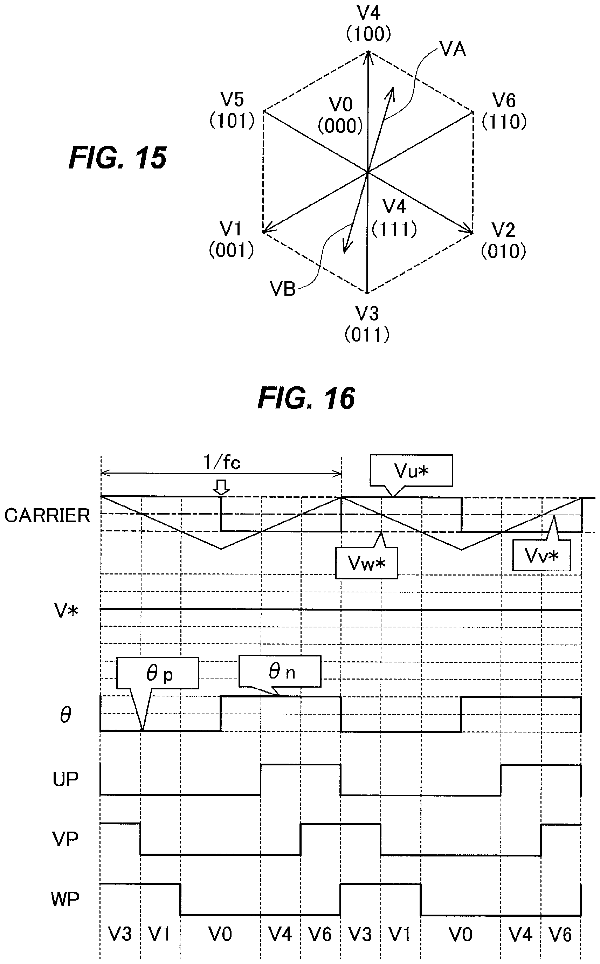

Here, in order to apply high frequency voltage, the PWM-signal generating unit 26 needs to alternately output voltage VA (phase $\theta p$) and voltage VB (phase $\theta n$), which has a phase 180 degrees different from that of the voltage VA, as illustrated in FIG. 15.

In the conventional technique, high frequency voltage is applied by setting, for example, $\theta p=0°$ and $\theta n=180°$ and transitioning the voltage vectors in the order of the voltage vector V0, the voltage vector V4, the voltage vector V7, the voltage vector V3, and the voltage vector V0. However, during transition from the voltage vector V4 to the voltage vector V7, the common-mode voltage of +4Vdc/6 fluctuates, and during transition from the voltage vector V3 to the voltage vector V0, the common-mode voltage of -Vdc/6 fluctuates, which may cause an increase in noise.

Accordingly, in the first embodiment, the PWM-signal generating unit 26 induces voltage VA and voltage VB from a composite vector of multiple vectors selected from the voltage vectors V0 to V7.

For example, the PWM-signal generating unit 26 induces the voltage VA from a composite vector of the voltage vectors V4 and V6, and induces the voltage VB from a composite vector of the voltage vectors V1 and V3. This causes the vector transitioning pattern in the order of the voltage vector V0, the voltage vector V4, the voltage vector V7, the voltage vector V3, and the voltage vector V0 to becomes a vector transitioning pattern in the order of the voltage vector V0, the voltage vector V4, the voltage vector V6, the voltage vector V7, the voltage vector V3, the voltage vector V1, and the voltage vector V0.

According to FIG. 14, in such a vector pattern, the transition of the voltage vectors results in maximum fluctuation of the common-mode voltage of $\pm 2Vdc/6$, and the time variation (dV/dt) of the common-mode voltage can be suppressed.

Such a vector pattern is effective for relatively high frequency noise terminal voltages or the like because the time variation (dV/dt) of the common-mode voltage is suppressed, but noise occurs at a frequency lower than that of the noise terminal voltage generated by the time variation (dV/dt) of the common-mode voltage because fluctuation occurs between the common-mode voltage -Vdc/2 of the voltage vector V0 and the common-mode voltage +Vdc/2 of the voltage vector V7 in the carrier cycle.

Therefore, as illustrated in FIG. 16, the PWM-signal generating unit 26 can also employ a vector pattern that erases the voltage vector V7, such as a vector pattern that transitions in the order of the voltage vector V0, the voltage vector V4, the voltage vector V6, the voltage vector V3, the voltage vector V1, and the voltage vector V0. Even if such a vector pattern is adopted, the voltage vector V7 does not affect the output voltage because it is a voltage vector outputting zero voltage. The same effect is be achieved by employing a vector pattern that erases the voltage vector V0 instead of the voltage vector V7.

In the conventional vector pattern, fluctuation of the common-mode voltage of $\pm 2Vdc/6$ occurs at the transition from the voltage vector V6 to the voltage vector V7 and the transition from the voltage vector V7 to the voltage vector V3, but it is possible to reduce the fluctuation of the common-mode voltage to zero by a vector pattern of a direct transition from the voltage vector V6 to the voltage vector V3. Furthermore, the positive and negative widths of the common-mode voltage are -Vdc/2 to +Vdc/6, which is two thirds of that of the conventional vector pattern. This can contribute to reduction in the noise terminal voltage or leakage current.

As described above, in the first embodiment, noise terminal voltage or leakage current can be reduced without use of special additional components, so that the coil or capacitor used in the noise filter can be reduced in size. Furthermore, in the first embodiment, an external core for noise reduction is not required, which not only reduces size and weight but also reduces cost.

The operation of the inverter control unit 10 will now be explained.

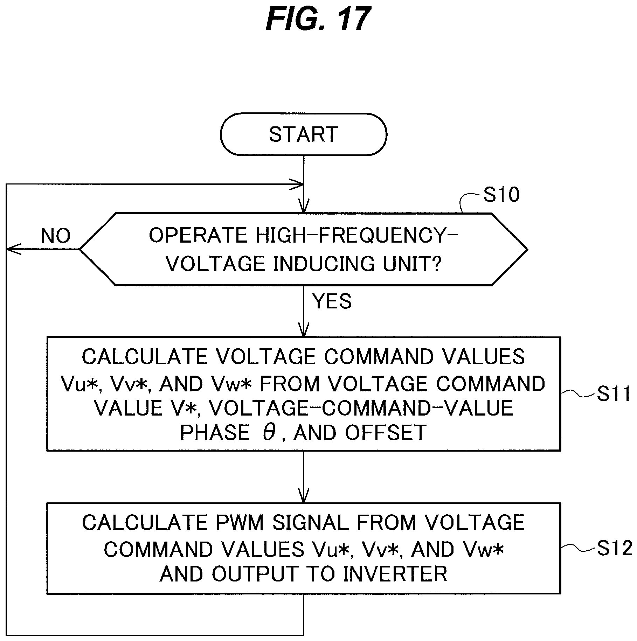

FIG. 17 is a flowchart illustrating the operation of the inverter control unit 10 according to the first embodiment.

First, the heating judgement unit 12 determines whether or not the high-frequency-voltage inducing unit 11 is to be operated as described above to cause high frequency induced while the operation of the compressor 1 is stopped (step S10).

If the heating judgement unit 12 determines that high frequency is to be induced, in other words, if the output value of the heating judgement unit 12 is "1" (YES in step S10), the processing proceeds to step S11. This generates a PWM signal for preheating.

Meanwhile, if the heating judgement unit 12 determines that high frequency is not to be induced, in other words, if the output value of the heating judgement unit 12 is "0" (NO in step S10), the processing returns to step S10, and it is determined whether or not to operate the high-frequency-voltage inducing unit 11 again after a predetermined time.

In step S11, the selecting unit 23 selects the voltage command value V* and the reference phase θf. The selecting unit 23 also selects the phase θp or θn. The adding unit 27 adds the reference phase θf to the phase θp or θn selected by the selecting unit 23 to obtain the voltage-command-value phase θ. Then, the voltage-command generating unit 25 calculates the voltage command values Vu*, Vv*, and Vw* from equations (4) to (6) on the basis of the voltage command value V*, the voltage-command-value phase θ, and the offset dB, and outputs the calculated voltage command values Vu*, Vv*, and Vw* to the PWM-signal generating unit 26.

Next, the PWM-signal generating unit 26 compares the voltage command values Vu*, Vv*, and Vw* from the voltage-command generating unit 25 with the carrier signal, obtains the PWM signals UP, VP, WP, UN, VN, and WN, and outputs them to the inverter device 9 (step S12). In this way, the switching elements 17a to 17f of the inverter device 9 are driven, and high frequency voltage is applied to the motor 8.

When high frequency voltage is applied to the motor 8, the iron loss of the motor 8 and the copper loss caused by the current flowing through the windings efficiently heat the motor 8. The heating of the motor 8 causes heating and vaporizing of the liquid refrigerant retained in the compressor 1, and refrigerant leaks outside the compressor 1.

After a predetermined time, the processing returns to step S10, and it is determined whether further heating is necessary or not.

As described above, in the heat pump device 100 according to the first embodiment, since high frequency voltage is applied to the motor 8 while the liquid refrigerant is retained in the compressor 1, the motor 8 can be efficiently heated while noise is suppressed. This enables efficient heating of the refrigerant retained in the compressor 1 to cause the refrigerant retained in the compressor 1 to leak to the outside.

If high frequency voltage of a frequency equal to or higher than an operating frequency or higher during a compression operation is applied to the motor 8, the rotor in the motor 8 cannot follow the frequency, and no rotation or vibration occurs Therefore, in step S11 of FIG. 17, it is desirable for the selecting unit 23 to output a reference phase θf equal to or higher than the operating frequency during the compression operation.

In general, the operating frequency during the compression operation is 1 kHz at most. Therefore, it is sufficient for high frequency voltage of 1 kHz or more be applied to the motor 8. Moreover, when high frequency voltage of 14 kHz or more is applied to the motor 8, the vibrating sound of the core of the motor 8 approaches the upper limit of the audible frequency, and this is effective in noise reduction. Therefore, for example, the selecting unit 23 outputs a reference phase $\theta f$ that obtains high frequency voltage of approximately 20 kHz.

However, high frequency voltage having a frequency exceeding the maximum rated frequency of the switching elements 17a to 17f causes a load or a power supply short-circuit due to breaking of the switching elements 17a to 17f, and this may lead to smoke or ignition. Therefore, it is desirable that the frequency of the high frequency voltage be below the maximum rated frequency in order to ensure reliability.

In recent years, motors having an interior permanent magnet (IPM) structure or concentrated winding motors with small coil ends and low winding resistance are widely used for compressor motors for heat pump devices in order to enhance efficiency. The concentrated winding motors require a large amount of current to flow through the windings because of their winding resistance is small and heat generation due to copper loss is low. When a large amount of current flows through the windings, the current flowing to the inverter device 9 also increases, and the inverter loss increases.

Accordingly, when heating is performed by applying the above-described high frequency voltage, the inductance component due to the high frequency increases, and the winding impedance increases. Therefore, although the current flowing through the windings is reduced, and copper loss decreases, iron loss occurs due to the application of high frequency voltage and effective heating can be performed. Furthermore, since the reduction in the current flowing through the windings reduces the current flowing through the inverter 20, the loss of the inverter device 9 can be reduced, and highly efficient heating can be achieved.

When heating is performed by applying the high frequency voltage described above, the rotor surface where high frequency magnetic flux is chained also serves as a heating part when the compressor 1 is the motor 8 having the IPM structure. Therefore, it is possible to efficiently heat the refrigerant to enable an increase in the contact surface of the refrigerant or quick heating of the compression system.

For the switching elements 18a to 18f constituting the inverter device 9 and the ring-flow diodes 19a to 19f connected in parallel to the switching elements 18a to 18f, semiconductors made of silicon (Si) are usually used today. However, a wide bandgap semiconductor composed of silicon carbide (SiC), gallium nitride (GaN), or diamond may be used instead.

Here, at least one of the three-phase upper switching elements 18a, 18b, and 18c and the three-phase lower switching elements 18d, 18e, and 18f should to be composed of a wide bandgap semiconductor.

Switching elements or diode elements composed of such a wide bandgap semiconductor have high voltage tolerance and high allowable current density. Therefore, it is possible to downsize the switching elements or diode elements, and by using these downsized switching elements or diode elements, it is possible to downsize a semiconductor module incorporating these elements.

Moreover, the switching elements or diode elements composed of such a wide bandgap semiconductor have high heat resistance. Therefore, the heat dissipating fin of the heat sink can be downsized, or the semiconductor module can be further downsized because the liquid cooling parts can be cooled by air.

Furthermore, the switching elements or diode elements composed of such a wide bandgap semiconductor have low power loss. Therefore, it is possible to enhance the efficiency of the switching elements or the diode elements, and eventually the efficiency of the semiconductor module can be improved.

Since high frequency switching of the switching elements or diode elements composed of such a wide bandgap semiconductor is possible, high frequency current can also flow to the to the motor 8, and the current flowing to the inverter device 9 can be reduced by a reduction in the winding current due to an increase in the winding impedance of the motor 8. Therefore, it is possible to obtain a more efficient heat pump device. Since the frequency can easily be made higher, it is easier to set a frequency above the audible frequency, and there is an advantage that noise control is easy.

Although it is desirable that both the switching elements and the diode elements are composed of a wide bandgap semiconductor, it is sufficient that any one of the elements be composed of a wide bandgap semiconductor. In such a case, the effect described in the present embodiment can be achieved.

Moreover, it is possible to achieve the same effect by using a superjunction structure metal-oxide-semiconductor (MOSFET) known as a highly efficient switching element.

A compressor with a scroll mechanism has difficulty in providing high pressure relief for the compression chamber. Therefore, compared to other types of compressors, it is likely that the compression system will be damaged under excessive stress when the liquid is compressed. However, in the heat pump device 100 of the first embodiment, efficient heating of the compressor 1 is possible, and the retention of the liquid refrigerant in the compressor 1 can be suppressed. As a result, liquid compression can be prevented, and thus it is also effective to use a scroll compressor as the compressor 1.

Furthermore, in the case of heating equipment with a frequency exceeding 10 kHz and an output exceeding 50 W, there may be restrictions imposed by laws and regulations. Therefore, the amplitude or frequency of the voltage command value may be adjusted in advance so as not to exceed 50 W.

The inverter control unit 10 can be implemented by a discrete system of a central processing unit (CPU), a digital signal processor (DSP), or a microcomputer. The inverter control unit 10 may be implemented by other electrical circuit devices such as analog circuits or digital circuits.

In other words, the inverter control unit 10 can be implemented by circuitry.

## SECOND EMBODIMENT

The second embodiment describes an example circuit configuration of a heat pump device 200. FIG. 1, etc., illustrates, for example, the heat pump device 100 in which the compressor 1, the four-way valve 2, the heat exchanger 3, the expansion system 4, and the heat exchanger 5 are sequentially connected by the refrigerant piping 6. In the second embodiment, a heat pump device 200 having a more specific configuration will be described.

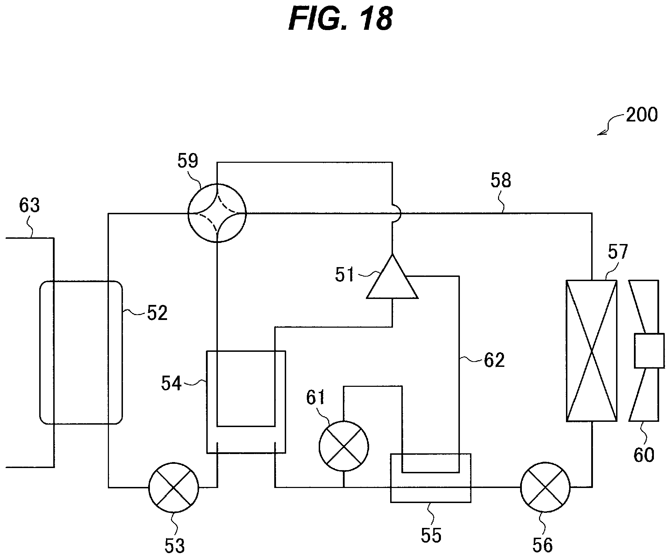

FIG. 18 is a block diagram schematically illustrating a configuration of the heat pump device 200 according to the second embodiment.

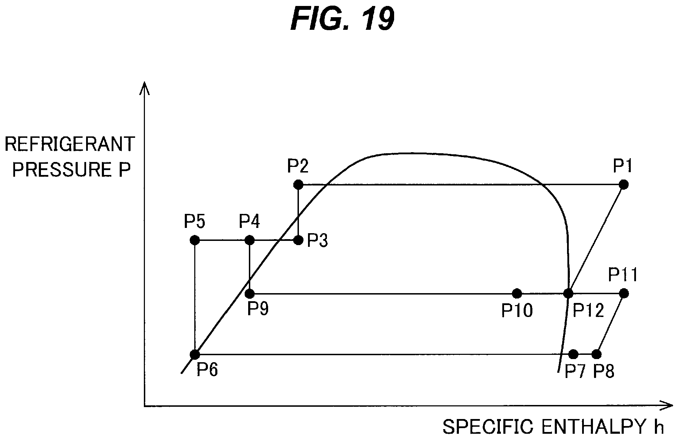

FIG. 19 is a Mollier diagram illustrating the state of a refrigerant of the heat pump device 200 according to the second embodiment. In FIG. 19, the horizontal axis represents the specific enthalpy and the vertical axis represents the refrigerant pressure.

The heat pump device 200 includes a compressor 51, a heat exchanger 52, an expansion system 53, a receiver 54, an internal heat exchanger 55, an expansion system 56, and a heat exchanger 57. The heat pump device 200 further includes a main refrigerant circuit 58 that sequentially connects these components by piping and circulates refrigerant. Here, the heat exchanger 52 is also referred to as a first heat exchanger, and the heat exchanger 57 is also referred to as a second heat exchanger.

In the main refrigerant circuit 58, a four-way valve 59 is provided on the discharge side of the compressor 51, so that the circulation direction of the refrigerant can be switched. A fan 60 is also provided near the heat exchanger 57. The compressor 51 is the compressor 1 described in the first embodiment, and has a motor 8 driven by an inverter device 9 and a compression system 7.

The heat pump device 200 further includes an injection circuit 62 that connects the receiver 54 and the internal heat exchanger 55 to the injection pipe of the compressor 51 by piping. An expansion system 61 and the internal heat exchanger 55 are sequentially connected to the injection circuit 62.

A water circuit 63 that circulates water is connected to the heat exchanger 52. A device using water such as a water heater, a radiator, or a heat radiator, e.g., floor heater is connected to the water circuit 63.

First, the operation of the heat pump device 200 during the heating operation will be explained.

During the heating operation, the four-way valve 59 is set in the solid line direction. The heating operation includes not only the heating used in air conditioning, but also hot water supply that heats water to produce hot water.

The gas-phase refrigerant that has become high temperature and high pressure (point P1 in FIG. 19) in the compressor 51 is discharged from the compressor 51 and liquefied (point P2 in FIG. 19) through heat exchange by the heat exchanger 52, which serves as a condenser and a radiator. At this time, the heat dissipated from the refrigerant heats the water circulating through the water circuit 63, which is a fluid utilization device, and is used for heating or hot water supply.

The liquid-phase refrigerant liquefied by the heat exchanger 52 is depressurized by the expansion system 53 and enters a gas-liquid two-phase state (point P3 in FIG. 19). The refrigerant that has entered a gas-liquid two-phase state at the expansion system 53 exchanges heat at the receiver 54 with the refrigerant being taken into the compressor 51, and is cooled and liquefied (point P4 in FIG. 19). The liquid-phase refrigerant liquefied by the receiver 54 diverges and flows to the main refrigerant circuit 58 and the injection circuit 62.

The liquid-phase refrigerant flowing through the main refrigerant circuit 58 is further cooled by exchanging heat at an internal heat exchanger 55 with the refrigerant depressurized by the expansion system 61 and flowing through the injection circuit 62 in a gas-liquid two-phase state (point P5 in FIG. 19). The liquid-phase refrigerant cooled by the internal heat exchanger 55 is depressurized by the expansion system 56 and enters a gas-liquid two-phase state (point P6 in FIG. 19). The refrigerant that has entered a gas-liquid two-phase state at the expansion system 56 exchanges heat with the outside air at the heat exchanger 57, which serves as an evaporator, and is heated (point P7 in FIG. 19). Then, the refrigerant heated by the heat exchanger 57 is further heated by the receiver 54 (point P8 in FIG. 19) and taken into the compressor 51.

Meanwhile, as described above, the refrigerant flowing through the injection circuit 62 is depressurized by the expansion system 61 (point P9 in FIG. 19) and exchanges heat at the internal heat exchanger 55 (point P10 in FIG. 19). The refrigerant (injection refrigerant) in a gas-liquid two-phase state that has exchanged heat at the internal heat exchanger 55 flows into the compressor 51 from the injection pipe of the compressor 51 while remaining in the gas-liquid two-phase state.

In the compressor 51, the refrigerant taken in from the main refrigerant circuit 58 (point P8 in FIG. 19) is compressed to an intermediate pressure and heated (point P11 in FIG. 19). The refrigerant compressed to an intermediate pressure and heated (point P11 in FIG. 19) is merged with the injection refrigerant (point P10 in FIG. 19), and the temperature decreases (point P12 in FIG. 19). Then, the refrigerant whose temperature has dropped (point P12 in FIG. 19) is further compressed, heated to high temperature and high pressure, and discharged (point P1 in FIG. 19).

When an injection operation is not performed, the opening degree of the expansion system 61 is fully closed. That is, when an injection operation is performed, the opening degree of the expansion system 61 is larger than a predetermined opening degree, but when an injection operation is not performed, the opening degree of the expansion system 61 is made smaller than the predetermined opening degree. In this way, no refrigerant flows into the injection pipe of the compressor 51. Here, the opening degree of the expansion system 61 is electronically controlled by a control unit such as a microcomputer.

Next, the operation of the heat pump device 200 during an air conditioning operation will be explained.

During an air conditioning operation, the four-way valve 59 is set in the dashed line direction. An air conditioning operation includes not only cooling used in air conditioning, but also cold-water supply and refrigeration by removing heat from water.

A gas-phase refrigerant (point P1 in FIG. 19) that has become high temperature and high pressure in the compressor 51 is discharged from the compressor 51, exchanges heat at the heat exchanger 57, which serves as a condenser and a radiator, and is liquefied (point P2 in FIG. 19). The liquid-phase refrigerant liquefied by the heat exchanger 57 is depressurized by the expansion system 56 and enters a gas-liquid two-phase state (point P3 in FIG. 19). The refrigerant that has entered a gas-liquid two-phase state by the expansion system 56 exchanges heat at the internal heat exchanger 55, is cooled, and is liquefied (point P4 in FIG. 19). At the internal heat exchanger 55, the refrigerant that has entered a gas-liquid two-phase state by the expansion system 56 exchanges heat with the refrigerant that has entered a gas-liquid two-phase state (point P9 in FIG. 19) by the expansion system 61 depressurizing the liquid-phase refrigerant that has been liquefied by the internal heat exchanger 55. The liquid-phase refrigerant (point P4 in FIG. 19) that has exchanged heat at the internal heat exchanger 55 diverges and flows into the main refrigerant circuit 58 and the injection circuit 62.

The liquid-phase refrigerant flowing through the main refrigerant circuit 58 exchanges heat at the receiver 54 with the refrigerant being taken into the compressor 51 and is further cooled (point P5 in FIG. 19). The liquid-phase refrigerant that has been cooled by the receiver 54 is depressurized by the expansion system 53 to enter a gas-liquid two-phase state (point P6 in FIG. 19). The refrigerant that has entered a gas-liquid two-phase state by the expansion system 53 exchanges heat at the heat exchanger 52, which serves as an evaporator, and is heated (point P7 in FIG. 19). At this time, by the endothermic effect of the refrigerant, the water circulating in the water circuit 63 is cooled and used for cooling or freezing.

Then, the refrigerant that has been heated by the heat exchanger 52 is further heated by the receiver 54 (point P8 in FIG. 19) and is taken into the compressor 51.

Meanwhile, as described above, the refrigerant flowing through the injection circuit 62 is depressurized by the expansion system 61 (point P9 in FIG. 19) and exchanges heat at the internal heat exchanger 55 (point P10 in FIG. 19). The refrigerant (injection refrigerant) in the gas-liquid two-phase state that has exchanged heat at the internal heat exchanger 55 flows into the injection pipe of the compressor 51 while remaining in a gas-liquid two-phase state. The compression operation in the compressor 51 is the same as that in the heating operation.

As in the case of the heating operation, when an injection operation is not performed, the opening degree of the expansion system 61 is fully closed so that the refrigerant does not flow into the injection pipe of the compressor 51.

In the above description, the heat exchanger 52 is described as a heat exchanger such as a plate type heat exchanger that exchanges heat between the refrigerant and water circulating through the water circuit 63, but it is not limited to this and may be one that exchanges heat between the refrigerant and air. The water circuit 63 may be a circuit in which fluids other than water circulates.

As described above, the heat pump devices 100 and 200 can be used as heat pump devices using inverter compressors such as air conditioners, heat pump water heaters, refrigerators, and freezers, and are particularly suitable for heating the compressors.

## DESCRIPTION OF REFERENCE CHARACTERS

1 compressor; 2 four-way valve; 3 heat exchanger; 4 expansion system; 5 heat exchanger; 6 refrigerant pipe; 7 compression system; 8 motor; 9 inverter device; 10 inverter control unit; 11 high-frequency-voltage inducing unit; 12 heating judgement unit; 13 common-mode-voltage suppressing unit; 14 AC power source; 15 rectifier; 16 smoothing capacitor; 17 bus-voltage detecting unit; 18a to 18f switching element; 19a to 19f ring-flow diode; 20 inverter; 21 table data; 22 external input unit; 23 selecting unit; 25 voltage-command generating unit; 26 PWM-signal generating unit; 27 adding unit; 100, 200 heat pump device.

**Claims**

1. A heat pump device comprising:

   a compressor including a compression system to compress a refrigerant and a motor to drive the compression system;
   an inverter to apply voltage to the motor; and
   an inverter control unit configured to control the inverter, wherein
   the inverter control unit is configured to control the inverter in a heating operation mode when the compressor needs heating, the heating operation mode being a mode in which high frequency voltage higher than driving frequency voltage is applied to the motor, the driving frequency voltage being voltage having a frequency to drive the compression system with, and
   in the heating operation mode, the inverter control unit is configured to control the inverter so that variation of common-mode voltage induced by switching of the inverter is equal to or less than two thirds of bus voltage of the inverter.

2. The heat pump device according to claim 1, wherein in the heating operation mode, the inverter control unit switches the inverter between a first voltage phase and a second voltage phase during a switching cycle of the inverter, the second voltage phase being shifted by 180 degrees from the first voltage phase.

3. The heat pump device according to claim 1 or 2, wherein a width between a positive peak of the common-mode voltage and a negative peak of the common-mode voltage is less than the bus voltage.

4. The heat pump device according to any one of claims 1 to 3, wherein

   the inverter includes three-phase upper switching elements and three-phase lower switching elements, to enable output of three-phase AC voltage as the driving frequency voltage, and
   the inverter control unit does not execute control in which all of the three-phase upper switching elements are in an on state or all three-phase lower switching elements are in an on state during in the switching cycle of the inverter.

5. The heat pump device according to any one of claims 1 to 3, wherein

   the inverter includes three-phase upper switching elements and three-phase lower switching elements, to enable output of three-phase AC voltage as the driving frequency voltage, and
   at least one of the three-phase upper switching elements and the three-phase lower switching elements comprise a wide bandgap semiconductor each.

6. The heat pump device according to any one of claims 1 to 3, wherein

   the inverter includes three-phase upper switching elements, three-phase lower switching elements, three ring-flow diodes connected in parallel to the respective three-phase upper switching elements, and three ring-flow diodes connected in parallel to the respective three-phase lower switching elements, to enable output of three-phase AC voltage as the driving frequency voltage, and
   the ring-flow diodes comprise a wide bandgap semiconductor each.

7. The heat pump device according to claim 5 or 6, wherein the wide bandgap semiconductor comprises silicon carbide, gallium nitride, or diamond.

8. A heat pump device comprising:

   a refrigerant circuit connecting by piping: a compressor including a compression system to compress a refrigerant and a motor to drive the compression system; a first heat exchanger to exchange heat of the refrigerant, an expansion system to expand the refrigerant; and a second heat exchanger to exchange heat of the refrigerant; an inverter to apply voltage to the motor; and

an inverter control unit configured to control the inverter, wherein

the inverter control unit is configured to control the inverter in a heating operation mode when the compressor needs heating, the heating operation mode being a mode in which high frequency voltage higher than driving frequency voltage is applied to the motor, the driving frequency voltage being voltage having a frequency to drive the compression system with, and

in the heating operation mode, the inverter control unit is configured to control the inverter so that variation of common-mode voltage induced by switching of the inverter is equal to or less than two thirds of bus voltage of the inverter.

## FIG. 1

100

Vu, Vv, Vw

10

INVERTER CONTROL UNIT

PWM

INVERTER DEVICE

9

Vdc

HIGH-FREQUENCY-VOLTAGE GENERATING UNIT ~~~ 11

COMMON-MODE-VOLTAGE SUPPRESSING UNIT ~~~ 13

ON/OFF

HEATING JUDGEMENT UNIT ~~~ 12

# FIG. 2

**FIG. 3**

EP 4 417 897 A1

## FIG. 4

EP 4 417 897 A1

# FIG. 5

| VOLTAGE VECTOR | VOLTAGE DIRECTION | UP | VP | WP | UN | VN | WN |
|---|---|---|---|---|---|---|---|
| V0 | 0 | 0 | 0 | 0 | 1 | 1 | 1 |
| V1 | +W | 0 | 0 | 1 | 1 | 1 | 0 |
| V2 | +V | 0 | 1 | 0 | 1 | 0 | 1 |
| V3 | −U | 0 | 1 | 1 | 1 | 0 | 0 |
| V4 | +U | 1 | 0 | 0 | 0 | 1 | 1 |
| V5 | −V | 1 | 0 | 1 | 0 | 1 | 0 |
| V6 | −W | 1 | 1 | 0 | 0 | 0 | 1 |
| V7 | 0 | 1 | 1 | 1 | 0 | 0 | 0 |

**FIG. 6**

FIG. 7

22

## FIG. 8A

[V0 VECTOR]

V4
(100)

V5
(101)

V6
(110)

V0
(000)

V1
(001)

V7
(111)

V2
(010)

V3
(011)

MOTOR

## FIG. 8B

[V4 VECTOR]

V4
(100)

V5
(101)

V6
(110)

V0
(000)

V1
(001)

V7
(111)

V2
(010)

V3
(011)

MOTOR

CURRENT

## FIG. 8D

[V3 VECTOR]

V4
(100)

V5
(101)

V6
(110)

V0
(000)

V1
(001)

V7
(111)

V2
(010)

V3
(011)

MOTOR

CURRENT

## FIG. 8C

[V7 VECTOR]

V4
(100)

V5
(101)

V6
(110)

V0
(000)

V1
(001)

V7
(111)

V2
(010)

V3
(011)

MOTOR

EP 4 417 897 A1

# FIG. 9

# FIG. 10

FIG. 11A

FIG. 11B

FIG. 11C

FIG. 11D

# FIG. 12

| | REFERENCE PHASE $\theta f = 0$deg | REFERENCE PHASE $\theta f = 30$deg | REFERENCE PHASE $\theta f = 60$deg |
|---|---|---|---|
| U PHASE CURRENT | | | |
| V PHASE CURRENT | | | |
| W PHASE CURRENT | | | |

# FIG. 13

## FIG. 14

|     | V0      | V1       | V2       | V3       | V4       | V5       | V6       | V7       |
| --- | ------- | -------- | -------- | -------- | -------- | -------- | -------- | -------- |
| V0  | 0       | +2Vdc/6  | +2Vdc/6  | +4Vdc/6  | +2Vdc/6  | +4Vdc/6  | +4Vdc/6  | +Vdc     |
| V1  | −2Vdc/6 | 0        | 0        | +2Vdc/6  | 0        | +2Vdc/6  | +2Vdc/6  | +4Vdc/6  |
| V2  | −2Vdc/6 | 0        | 0        | +2Vdc/6  | 0        | +2Vdc/6  | +2Vdc/6  | +4Vdc/6  |
| V3  | −4Vdc/6 | −2Vdc/6  | −2Vdc/6  | 0        | −2Vdc/6  | 0        | 0        | +2Vdc/6  |
| V4  | −2Vdc/6 | 0        | 0        | +2Vdc/6  | 0        | +2Vdc/6  | +2Vdc/6  | +4Vdc/6  |
| V5  | −4Vdc/6 | −2Vdc/6  | −2Vdc/6  | 0        | −2Vdc/6  | 0        | 0        | +2Vdc/6  |
| V6  | −4Vdc/6 | −2Vdc/6  | −2Vdc/6  | 0        | −2Vdc/6  | 0        | 0        | +2Vdc/6  |
| V7  | −Vdc    | −4Vdc/6  | −4Vdc/6  | −2Vdc/6  | −4Vdc/6  | −2Vdc/6  | −2Vdc/6  | 0        |

EP 4 417 897 A1

## FIG. 15

## FIG. 16

# FIG. 17

```
                    ┌─────────────┐
                    │    START    │
                    └──────┬──────┘
                           │
                           ▼                          ╭─S10
        NO      ╱─────────────────────────╲
    ◄───────────  OPERATE HIGH-FREQUENCY-   ╲
                ╲  VOLTAGE INDUCING UNIT?    ╱
                 ╲─────────────────────────╱
                           │
                          YES
                           ▼
    ┌──────────────────────────────────────────┐
    │   CALCULATE VOLTAGE COMMAND VALUES         │
    │  Vu*, Vv*, AND Vw* FROM VOLTAGE COMMAND    │   ╭─S11
    │   VALUE V*, VOLTAGE-COMMAND-VALUE          │
    │       PHASE θ, AND OFFSET                  │
    └──────────────────┬─────────────────────────┘
                       │
                       ▼
    ┌──────────────────────────────────────────┐
    │  CALCULATE PWM SIGNAL FROM VOLTAGE         │
    │  COMMAND VALUES Vu*, Vv*, AND Vw*          │   ╭─S12
    │     AND OUTPUT TO INVERTER                 │
    └──────────────────┬─────────────────────────┘
                       │
```

# FIG. 18

## FIG. 19

## INTERNATIONAL SEARCH REPORT

| International application No. |
| --- |
| **PCT/JP2021/037579** |

**A.    CLASSIFICATION OF SUBJECT MATTER**

*F25B 1/00*(2006.01)i
FI:    F25B1/00 341P; F25B1/00 321B

According to International Patent Classification (IPC) or to both national classification and IPC

**B.    FIELDS SEARCHED**

Minimum documentation searched (classification system followed by classification symbols)

F25B1/00-49/04; F24F1/00-13/32; H02P6/00-6/34,21/00-25/03,25/04,25/10-27/18

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2012/029099 A1 (MITSUBISHI ELECTRIC CORP.) 08 March 2012 (2012-03-08) paragraphs [0012]-[0027], [0042]-[0047], fig. 1-3, 10-13 | 1-2, 5-8 |
| A | WO 2015/162704 A1 (MITSUBISHI ELECTRIC CORP.) 29 October 2015 (2015-10-29) entire text, all drawings | 1-8 |

☐ Further documents are listed in the continuation of Box C.          ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 November 2021** | **16 November 2021** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2021/037579**

| Patent document cited in search report | Publication date (day/month/year) | Patent family member(s) | Publication date (day/month/year) |
|---|---|---|---|
| WO 2012/029099 A1 | 08 March 2012 | US 2013/0152609 A1 paragraphs [0038]-[0081], [0107]-[0122], fig. 1-3, 10-13 EP 2613106 A1 CN 103154636 A | |
| WO 2015/162704 A1 | 29 October 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002277074 A